# EUROPEAN PATENT APPLICATION

(11) **EP 2 527 491 A1**
(43) Date of publication of application: **28.11.2012**
(21) Application number: 10843895.3
(22) Date of filing: 20.01.2010
(51) Int. Cl.: C23C 22/34, H01M 8/02

(54) **STAINLESS STEEL FOR CURRENT-CARRYING MEMBER HAVING LOW ELECTRICAL CONTACT RESISTANCE, AND PROCESS FOR PRODUCTION THEREOF**

(71) Applicant: JFE Steel Corporation, Tokyo, 100-0011 (JP)
(72) Inventor: ISHII, Tomohiro, Tokyo 100-0011 (JP); IDE, Shinsuke, Tokyo 100-0011 (JP); ISHIKAWA, Shin, Tokyo 100-0011 (JP); KATO, Yasushi, Tokyo 100-0011 (JP); UJIRO, Takumi, Tokyo 100-0011 (JP)
(74) Representative: HOFFMANN EITLE
(86) International application number: PCT/JP2010/051001
(87) International publication number: WO 2011/089730

(57) **Abstract**

The invention provides stainless steel for conductive members which exhibits excellent electrical conductivity (namely, low contact electric resistance), and a method for producing such stainless steel. In detail, stainless steel is dipped into a solution containing fluoride ions at a rate of dissolution of not less than 0.002 g/(m²·s) to less than 0.50 g/(m²·s), thereby incorporating fluorine into a passive film on the steel surface.

## Description

### [Technical Field]

The present invention relates to stainless steel for conductive members which exhibits low contact resistance, and a method for producing the same.

### [Background Art]

Stainless steel exhibits excellent corrosion resistance because of a passive film having been formed on the surface during production. Because such a passive film is based on chromium oxyhydroxide, stainless steel is poorly electrically conductive. Thus, it is necessary that stainless steel be subjected to a treatment such as gold plating in order to reduce contact electric resistance for use as a conductive member.
Various kinds of fuel cells (for example, proton-exchange membrane fuel cells) have been developed in recent years. Stainless steel has been widely used as separators in fuel cells. While stainless steel has corrosion resistance, separators require not only corrosion resistance but also electrical conductivity. Thus, studies have been carried out in order to establish a technique to improve the electrical conductivity of stainless steel and to use stainless steel as separators.

For example, Patent Literature 1 discloses a technique in which the surface of stainless steel (for example SUS304) is subjected to gold plating in order to reduce contact electric resistance and such plated stainless steel is used as a separator, thus achieving an increase in the output of a fuel cell. In the case where the gold plating film is thin, however, pinholes are apt to be formed, with the result that the prevention of corrosion becomes difficult and electrical conductivity cannot be maintained stably. On the other hand, forming a gold plating film with a large thickness increases the costs for producing separators.

Patent Literature 2 discloses a technique which improves the electrical conductivity of separators by using ferritic stainless steel in which carbon powder has been distributed and attached onto the surface. However, complicated processing is incurred in order to attach carbon powder, and the costs for producing separators are increased as a result. In the event that carbon powder becomes detached during separator production steps or fuel cell assembly steps, the effect of improving electrical conductivity cannot be obtained.

Patent Literature 3 discloses a technique for improving the electrical conductivity of separators by precipitating substances which have a function of increasing electrical conductivity (for example, M₂₃C₆ type carbide and M₂B type boride) on the surface of stainless steel. In order for such precipitates to be formed, carbon and boron need to be added to stainless steel. However, the addition of such elements results in hardening of stainless steel so as to markedly deteriorate the productivity in processing stainless steel sheets as well as to markedly deteriorate the formability in the production of separators. Further, chromium in stainless steel combines with carbon and boron so as to form precipitates, with the result that the amount of solid solution Cr is decreased and the corrosion resistance of stainless steel is deteriorated.

### [Citation List]

### [Patent Literature]

[PTL 1] Japanese Unexamined Patent Application Publication No. 10-228914
[PTL 2] Japanese Unexamined Patent Application Publication No. 2000-277133
[PTL 3] Japanese Unexamined Patent Application Publication No. 2001-214286

### [Summary of Invention]

### [Technical Problem]

It is an object of the invention to provide stainless steel for conductive members which exhibits low contact electric resistance (namely, excellent electrical conductivity of a passive film) without being deteriorated in corrosion resistance or formability, and a method for producing such stainless steel.

### [Solution to Problem]

The present inventors studied the relationship between the composition of a passive film formed on the surface of stainless steel and the contact electric resistance of stainless steel. As a result, the present inventors have found that the contact electric resistance can be drastically lowered by incorporating F (fluorine) into a passive film. It has been also found that F can be effectively incorporated into a passive film by subjecting stainless steel to a dipping treatment in an acid aqueous solution containing F ions under such conditions that the rate of dissolution becomes a predetermined rate, namely, under conditions in which the concentration or temperature of the acid aqueous solution containing F ions is manipulated so as to cause stainless steel to be dissolved at a predetermined rate of dissolution.

The present invention has been made on the basis of the above findings.
That is, the present invention provides the following.
(1) Stainless steel for conductive members which exhibits low contact electric resistance, wherein the stainless steel has a passive film on the surface and the passive film contains fluorine.
(2) A method for producing stainless steel for conductive members with low contact electric resistance, including dipping stainless steel into a solution containing fluoride ions at a rate of dissolution of not less than 0.002 g/(m²·s) to less than 0.50 g/(m²·s).
(3) The method described in (2), wherein the rate of dissolution is not less than 0.005 g/(m²·s) to less than 0.30 g/(m²·s).
(4) The method described in (2), wherein the rate of dissolution is not less than 0.01 g/(m²·s) to less than 0.10 g/(m²·s).

### [Advantageous Effects of Invention]

The stainless steel for conductive members according to the present invention achieves low contact electric resistance without being deteriorated in corrosion resistance or formability. The stainless steel for conductive members is suitable as separators in various kinds of fuel cells (in particular, proton-exchange membrane fuel cells). The inventive stainless steel for conductive members gives inexpensive separators which can replace expensive carbon separators or gold-plated separators used in conventional fuel cells.

The stainless steel for conductive members of the invention can be used widely not only as fuel cell separators but also stainless steel electric parts having electrical conductivity.

### [Brief Description of Drawings]

[FIG. 1] FIG. 1 is a cross sectional view which schematically illustrates a method for measuring contact resistance.
[FIG. 2A] FIG. 2A is a graph which shows the relationship between the sputtering time and the peak intensity obtained by X-ray photoelectron spectroscopy (before a holding time of 1000 hours).
[FIG. 2B] FIG. 2B is a graph which shows the relationship between the sputtering time and the peak intensity obtained by X-ray photoelectron spectroscopy (after a holding time of 1000 hours).

### [Description of Embodiments]

### [Embodiments of Invention]

Embodiments of the present invention will be described in detail hereinbelow. The percentages % for a chemical composition indicate % by mass unless otherwise mentioned. The components of stainless steel to which the present invention is applied are not particularly limited. Preferred examples of stainless steel are ferritic stainless steel and austenitic stainless steel in which a passive film formed on the surface contains Cr.
Ferritic stainless steel in the invention preferably contains the following components.

### C: not more than 0.03% by mass, N: not more than 0.03% by mass, C + N: not more than 0.03% by mass

Both of carbon and nitrogen react with chromium in ferritic stainless steel to form a compound which is precipitated as chromium carbonitride along grain boundaries, thereby lowering corrosion resistance. Thus, smaller contents of carbon and nitrogen are more preferable. A marked decrease in terms of corrosion resistance is avoided when the C content is not more than 0.03% by mass and the N content is not more than 0.03% by mass. If the total of the C content and the N content exceeds 0.03% by mass, the ductility of ferritic stainless steel is lowered to increase the probability of the occurrence of cracks during processing. Thus, it is preferable that the C content be not more than 0.03% by mass, the N content be not more than 0.03% by mass, and the C + N content be not more than 0.03% by mass. More preferably, the C content is not more than 0.015% by mass, the N content is not more than 0.015% by mass, and the C + N content is not more than 0.02% by mass.

### Cr: 16 to 45% by mass

Chromium is an element necessary for ensuring that ferritic stainless steel exhibits basic corrosion resistance. If the Cr content is less than 16% by mass, a fuel cell separator cannot endure long-term use depending on an environment in which the separator is exposed. If the Cr content exceeds 45% by mass, toughness is deteriorated by the precipitation of a σ phase. Thus, the Cr content needs to be in the range of 16 to 45% by mass, and preferably 16 to 25% by mass.

In addition to the limitation of the contents of C, N and Cr as well as the total content of C and N, the following elements may be added as required to ferritic stainless steel for conductive members according to the invention.

### Mo: not more than 5.0% by mass

Molybdenum, which may be appropriately added as required, is an effective element for suppressing local corrosion such as crevice corrosion of ferritic stainless steel. In order to obtain this effect, molybdenum is preferably added at a content of 0.01% by mass or more. However, adding molybdenum in excess of 5.0% by mass results in a marked embrittlement of ferritic stainless steel and a consequent decrease in productivity. Thus, the Mo content needs to be not more than 5.0% by mass.

### Si: not more than 1.0% by mass

Silicon is an effective element for deoxidation and may be added at a stage of smelting ferritic stainless steel. In order to obtain such an effect, silicon is preferably added at a content of 0.01% by mass or more. However, ferritic stainless steel containing an excessively large amount of silicon becomes hard and is deteriorated in terms of ductility. Thus, when silicon is added, the Si content is preferably not more than 1.0% by mass, and more preferably 0.01 to 0.6% by mass.

### Mn: not more than 1.0% by mass

Manganese combines with sulfur, which is an inevitable impurity, and thereby reduces the amount of solid solution sulfur in ferritic stainless steel. Thus, manganese is an effective element for suppressing the grain boundary segregation of sulfur and for preventing cracks from occurring during hot rolling. Such effects are obtained when the Mn content is not less than 0.001% by mass and not more than 1.0% by mass. Thus, when manganese is added, the Mn content is preferably not more than 1.0% by mass, and more preferably in the range of 0.001 to 0.8% by mass.

### Cu: not more than 3.0% by mass

Copper, which may be appropriately added as required, is an element that is effective for improving the corrosion resistance of ferritic stainless steel. In order to obtain such an effect, the Cu content is preferably not less than 0.01% by mass. However, adding copper in excess of 3.0% by mass results in deteriorated hot processability and a consequent decrease in productivity. Thus, when copper is added, the Cu content is preferably not more than 3.0% by mass, and more preferably 0.01 to 2.5% by mass.

### At least one of Ti, Nb, V and Zr: total content of 0.01 to 1.0% by mass

Titanium, niobium, vanadium and zirconium react with carbon and nitrogen in ferritic stainless steel so as to form carbonitrides. Because titanium, niobium, vanadium and zirconium fix carbon and nitrogen in such a manner, they are effective for preventing the decrease in corrosion resistance caused by the precipitation of chromium carbonitride, as well as for improving the press formability of ferritic stainless steel. With a total content of carbon and nitrogen being 0.03% by mass or less, the effect of improving press formability may be obtained by adding any of titanium, niobium, vanadium and zirconium at a content of 0.01% by mass or more. When all of titanium, niobium, vanadium and zirconium are added, the effect of improving press formability may be obtained by adding titanium, niobium, vanadium and zirconium at a total content of 0.01% by mass or more. The effect is saturated even when titanium, niobium, vanadium and zirconium are added individually at a content exceeding 1.0% by mass, or at a total content exceeding 1.0% by mass. Thus, when at least one of titanium, niobium, vanadium and zirconium is added, the total content of these elements is preferably in the range of 0.01 to 1.0% by mass.

In addition to the elements described above, calcium, magnesium and rare earth metals (REM) may be added each at a content of not more than 0.1% by mass in order to improve the hot processability of ferritic stainless steel, and aluminum may be added at a content of not more than 0.2% by mass in order to perform deoxidation at a stage of melting steel. Further, nickel may be added at a content of not more than 1% by mass in order to increase the toughness of ferritic stainless steel.
The balance is represented by iron and inevitable impurities.

Next, a preferred process for manufacturing ferritic stainless steel according to the invention will be described.
Ferritic stainless steel according to the invention may be manufactured by any known smelting process without limitation. For example, ferritic stainless steel may be suitably smelted in a converter furnace and subjected to secondary refining by strong-stirring vacuum oxygen decarburization (SS-VOD). From the viewpoints of productivity and product quality, a continuous casting process is preferable. A cast slab is heated to, for example, 1000 to 1250°C and hot rolled into a hot rolled sheet with a desired sheet thickness. This hot rolled sheet is annealed at 800 to 1150°C, pickled, and cold rolled into a predetermined product sheet thickness, or is preferably further annealed at 800 to 1150°C or further pickled, thus manufacturing a product. In accordance with production conveniences, cold rolling may be carried out two or more times with intermediate annealing performed as required in the cold rolling step. In accordance with an application, the cold rolled and annealed sheet may be subjected to light skin pass rolling or the like. The stainless steel sheet manufactured as described above is treated by a method for incorporating fluorine into a passive film on the stainless steel as will be described later.

Next, a preferred chemical composition of austenitic stainless steel in the invention will be described.

### C: not more than 0.1% by mass

Carbon reacts with chromium in austenitic stainless steel to form a compound which is precipitated as chromium carbide along grain boundaries, thereby lowering corrosion resistance. Thus, a smaller C content is more preferable. A marked decrease in terms of corrosion resistance is avoided when the C content is not more than 0.1% by mass. Thus, the C content is not more than 0.1% by mass, and preferably not more than 0.03% by mass.

### Cr: 13 to 30% by mass

Chromium is an element necessary for ensuring that austenitic stainless steel exhibits basic corrosion resistance. If the Cr content is less than 13% by mass, a fuel cell separator cannot endure long-term use depending on an environment in which the separator is exposed. If the Cr content exceeds 30% by mass, it becomes difficult to obtain an austenitic structure. Thus, the Cr content needs to be in the range of 13 to 30% by mass.

### Ni: 3 to 40% by mass

Nickel is an element that stabilizes an austenitic phase. This austenitic phase stabilization effect cannot be obtained if the Ni content is less than 3% by mass. If the Ni content is in excess of 40% by mass, a cost increase is caused due to the excessive consumption of nickel. Thus, the Ni content needs to be in the range of 3 to 40% by mass.

In addition to C, Cr and Ni, the following elements may be added as required to austenitic stainless steel according to the invention.

### Mo: not more than 10.0% by mass

Molybdenum, which may be appropriately added as required, is an effective element for suppressing local corrosion such as crevice corrosion of austenitic stainless steel. In order to obtain this effect, molybdenum is preferably added at a content of 0.01% by mass or more. However, adding molybdenum in excess of 10.0% by mass results in a marked embrittlement of stainless steel and a consequent decrease in productivity. Thus, the Mo content needs to be not more than 10.0% by mass.

### N: not more than 2.0% by mass

Nitrogen is an element that has an effect of suppressing local corrosion of austenitic stainless steel. However, it is industrially difficult to add nitrogen at a content exceeding 2.0% by mass. Thus, the upper limit is 2.0% by mass. In a usual smelting process, adding nitrogen in excess of 0.4% by mass at a stage of smelting stainless steel takes a long time so as to cause a decrease in productivity. Thus, the N content is more preferably not more than 0.4% by mass, and still more preferably 0.01 to 0.3% by mass from the viewpoint of cost.

### Cu: not more than 3.0% by mass

Copper is an element that is effective for improving the corrosion resistance of austenitic stainless steel. In order to obtain such an effect, the Cu content is preferably not less than 0.01% by mass. However, adding copper at a content in excess of 3.0% by mass results in deteriorated hot processability and a consequent decrease in productivity. Thus, when copper is added, the Cu content is preferably not more than 3.0% by mass, and more preferably 0.01 to 2.5% by mass.

### Si: not more than 1.5% by mass

Silicon is an effective element for deoxidation and may be added at a stage of smelting austenitic stainless steel. In order to obtain such an effect, silicon is preferably added at a content of 0.01% by mass or more. However, stainless steel for use as separators becomes hard and is deteriorated in terms of ductility when it contains an excessively large amount of silicon. Thus, when silicon is added, the Si content is preferably not more than 1.5% by mass, and more preferably 0.01 to 1.0% by mass.

### Mn: not more than 10% by mass

Manganese combines with sulfur, which is an inevitable impurity, and thereby reduces the amount of solid solution sulfur in austenitic stainless steel. Thus, manganese is an effective element for suppressing the grain boundary segregation of sulfur and for preventing cracks from occurring during hot rolling. Such effects are obtained when the Mn content is not less than 0.001% by mass. Thus, when manganese is added, the Mn content is preferably not less than 0.001% by mass. Manganese may be added also for the purpose of stabilizing an austenitic phase. However, a high rolling load is incurred when manganese is added in excess of 10% by mass, thus resulting in a decrease in productivity. Thus, the Mn content is preferably not more than 10%.

### At least one of Ti, Nb, V and Zr: total content of 0.01 to 2% by mass

Titanium, niobium, vanadium and zirconium react with carbon in austenitic stainless steel so as to form carbides. Because titanium, niobium, vanadium and zirconium fix carbon in such a manner, they are effective for improving the grain boundary corrosion resistance of austenitic stainless steel. With a C content being 0.1% by mass or less, the effect of improving corrosion resistance may be obtained by adding at least one of titanium, niobium, vanadium and zirconium at a content of 0.01% by mass or more. When all of titanium, niobium, vanadium and zirconium are added, the effect of improving corrosion resistance may be obtained by adding titanium, niobium, vanadium and zirconium at a total content of 0.01% by mass or more.
The effect is saturated even when titanium, niobium, vanadium and zirconium are added individually at a content exceeding 2% by mass, or at a total content exceeding 2% by mass. Thus, when at least one of titanium, niobium, vanadium and zirconium is added, the total content of these elements is preferably in the range of 0.01 to 2% by mass.

In addition to the elements described above, calcium, magnesium and rare earth metals (REM) may be added each at a content of not more than 0.1% by mass in order to improve the hot processability of austenitic stainless steel, and aluminum may be added at a content of not more than 0.2% by mass in order to perform deoxidation at a stage of melting steel.

The balance is represented by iron and inevitable impurities.

Next, a preferred process for manufacturing austenitic stainless steel according to the invention will be described.

Austenitic stainless steel according to the invention may be manufactured by any known smelting process without limitation. For example, austenitic stainless steel may be suitably smelted in a converter furnace and subjected to secondary refining by strong-stirring vacuum oxygen decarburization (SS-VOD). From the viewpoints of productivity and product quality, a continuous casting process is preferable. A cast slab is heated to, for example, 1000 to 1250°C and hot rolled into a hot rolled sheet with a desired sheet thickness. This hot rolled sheet is annealed at 800 to 1150°C, pickled, and cold rolled into a predetermined product sheet thickness, or is preferably further annealed at 800 to 1150°C or further pickled, thus manufacturing a product. In accordance with production conveniences, cold rolling may be carried out two or more times with intermediate annealing performed as required in the cold rolling step. In accordance with an application, the cold rolled and annealed sheet may be subjected to light skin pass rolling or the like. The stainless steel sheet manufactured as described above is treated by a method for incorporating fluorine into a passive film on the stainless steel as will be described below.

Next, a method for incorporating fluorine into a passive film on stainless steel will be described.
In order to incorporate fluorine into a passive film on stainless steel, stainless steel may be dipped into a solution containing F ions. The solution used herein is suitably an acid aqueous solution (for example, a compound liquid containing hydrofluoric acid and nitric acid, or a compound liquid containing sodium fluoride and nitric acid).
The F ions in the solution temporarily destroy a passive film formed on the surface of stainless steel before the dipping treatment, and are thereafter incorporated into the passive film. In order for fluorine to be effectively incorporated into a passive film, it is effective to dip stainless steel into a F ion-containing acid aqueous solution under such conditions that a specific rate of dissolution is obtained. That is, conditions such as the concentration or temperature of the F ion-containing acid aqueous solution are controlled so that stainless steel will be dissolved at a predetermined rate of dissolution. In order for fluorine to be incorporated into a passive film, it is necessary that the rate of dissolution of stainless steel be maintained in a predetermined range.

If the rate of dissolution of stainless steel is less than 0.002 g/(m²·s), the destruction of a passive film is so slow that a long time is required for fluorine to be incorporated into the passive film, thus leading to a decrease in the productivity of members such as separators. If the rate of dissolution of stainless steel is 0.50 g/(m²·s) or above, a passive film is destroyed and dissolved so quickly that any incorporation of fluorine into the passive film does not take place. That is, because the dissolution of stainless steel takes place in the absence of a passive film on the surface of the steel sheet, there are no opportunities for F ions to be incorporated into the passive film. Further, an excessively high rate of dissolution is accompanied by the risk that electrical conductivity and corrosion resistance may be deteriorated due to the attachment of smuts including precipitates (such as carbides and nitrides) formed in stainless steel as well as ferrous fluoride in the solution, onto the surface of stainless steel. Thus, the rate of dissolution of stainless steel is in the range of 0.002 g/(m²·s) to less than 0.50 g/(m²·s). The rate of dissolution of stainless steel is preferably in the range of 0.005 g/(m²·s) to less than 0.30 g/(m²·s). The rate of dissolution of stainless steel is more preferably in the range of 0.01 g/(m²·s) to less than 0.10 g/(m²·s). The higher the rate of dissolution, the more uniformly the surface is dissolved and the less likely the occurrence of surface defects such as uneven pickling. Thus, the rate of dissolution of stainless steel is preferably not less than 0.05 g/(m²·s).

The rate of dissolution of stainless steel is controlled by manipulating the concentration of an oxidizer (such as nitric acid) in the solution or the temperature of the solution. In detail, the rate of dissolution of stainless steel may be controlled by preliminarily determining the relationship between the conditions under which stainless steel is dipped into the acid aqueous solution (the concentration and temperature of the acid aqueous solution, and the dipping time) and the rate of dissolution.
A preferred concentration of the acid aqueous solution is such that the concentration of hydrofluoric acid is 1 to 15 % by mass, the concentration of nitric acid is not more than 5 % by mass (including 0 % by mass), and the hydrofluoric acid/nitric acid concentration ratio is not less than 2.5. If the oxidizer concentration or the hydrofluoric acid/nitric acid concentration ratio is outside the above range, obtaining a predetermined rate of dissolution becomes difficult.
The time for which stainless steel is dipped into the solution (hereinafter, referred to as dipping time) is not particularly limited. However, a dipping time of not less than 30 seconds is preferable in order to destroy a passive film. A dipping time of not less than 30 seconds ensures that a passive film can be destroyed even if a firm passive film has been formed during the production of stainless steel. On the other hand, an excessively long dipping time does not enable a further decrease in contact electric resistance but only leads to a decrease in separator productivity because the incorporation of fluorine into the passive film will be saturated. Thus, the dipping time is more preferably in the range of 30 to 180 seconds. The temperature of the acid aqueous solution is preferably not less than 40°C. A solution temperature of not less than 40°C ensures that a passive film can be destroyed even if a firm passive film has been formed during the production of stainless steel. If the temperature of the acid aqueous solution is in excess of 70°C, fluorine is evaporated and is not incorporated into the passive film. Thus, the temperature of the acid aqueous solution is preferably in the range of 40 to 70°C from the viewpoint of uniform dissolution. However, the solution temperature is not limited to such temperatures.

A F-containing passive film is formed as described above. According to the results of experiments carried out by the present inventors, a marked decrease in contact electric resistance was obtained when a passive film was confirmed to contain fluorine by X-ray photoelectron spectroscopy (XPS).
In the invention, the contact electric resistance is suitably not more than 20 mΩ·cm² In view of the use of stainless steel for conductive members, the contact electric resistance is more preferably not more than 10 mΩ·cm².
The mechanism by which the contact electric resistance of stainless steel is reduced by incorporating fluorine into a passive film is not clear. However, the effect of reducing contact electric resistance is probably realized because the incorporation of fluorine causes a change in the electronic structure of chromium oxyhydroxide forming the passive film, which is a semiconductor material.

In the invention, the amount of fluorine incorporated into the passive film is not particularly limited. An amount of fluorine that is necessary and sufficient for reducing contact electric resistance can be incorporated into the passive film by dipping stainless steel into a F ion-containing solution as described hereinabove.
The thickness of the passive film after the fluorine incorporation treatment may be measured by, for example, X-ray photoelectron spectroscopy in combination with sputtering. In the invention, the thickness of such a passive film is preferably not more than 10 nm, and more preferably not more than 7 nm from the viewpoint of the electrical conductivity of the passive film.

### [Examples]

Square test pieces that were 30 mm on a side were cut out from stainless steel sheets having a sheet thickness of 0.1 mm. The stainless steel sheets used herein were austenitic stainless steel SUS304L (18% Cr-8% Ni in terms of mass%), ferritic 21 Cr stainless steel (21% Cr-0.4% Cu in terms of mass%) and austenitic stainless steel SUS201 (17% Cr-4.5% Ni-6% Mn in terms of mass%). The test pieces were degreased with acetone, dipped into an acid aqueous solution under conditions described in Table 1, washed with purified water, and dried by cold blast. Four test pieces were dipped into an acid aqueous solution under each of the conditions.

The weight of the test piece was measured before and after the test piece was dipped into the acid aqueous solution, and the rate of dissolution was determined from the weight difference. The average values are described in Table 1.

The test pieces that had been dipped into the acid aqueous solution were analyzed by X-ray photoelectron spectroscopy to examine the presence or absence of fluorine in the passive film. In X-ray photoelectron spectroscopy, a spectrum recorded with respect to Fe, Cr, F and O was analyzed so as to calculate the integrated intensity of each element. Further, in-depth analysis of the distribution of each element was performed while removing the surface of the test piece by sputtering. The obtained spectrum with respect to the above elements was analyzed. When the test piece showed a distinct peak assigned to fluorine, the passive film was judged to contain fluorine. The results are described in Table 1.

The test pieces which had not been dipped in any acid aqueous solution were similarly analyzed so as to examine the presence or absence of fluorine in the passive film. The results are described in Table 1.

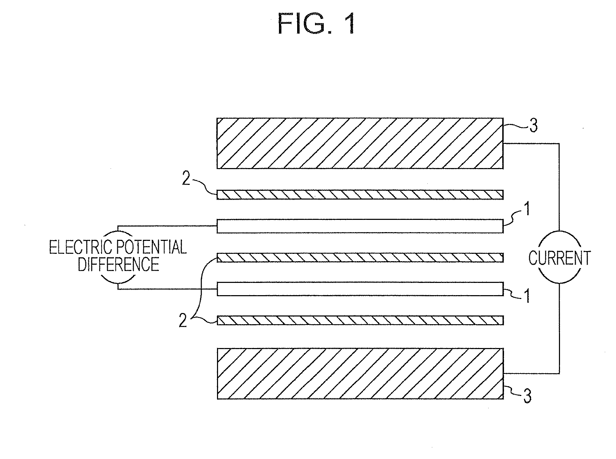

Further, the contact electric resistance was measured with respect to the test pieces which had been dipped in the acid aqueous solution as well as the test pieces which had not been dipped into any acid aqueous solution. In the measurement of contact electric resistance, as illustrated in FIG. 1, two test pieces 1 were alternately sandwiched between sheets of carbon paper 2 (TGP-H-120 made by Toray) of identical size, and electric poles 3 composed of gold-plated copper plates were brought into contact with the assembly. While applying a pressure per unit area of 196 N/cm² (= 20 kgf/cm²), the resistance between the two test pieces 1 was measured. The obtained resistance was multiplied by the contact area, and the product was divided by the number of contact surfaces (= 2), thereby determining the contact electric resistance. In order for stainless steel to be used for conductive members, the contact electric resistance is preferably not more than 20 mΩ·cm², and more preferably not more than 10 mΩ·cm². Combinations of the test pieces 1 were changed, and each combination was measured 4 times. The average values are described in Table 1.

Inventive Examples described in Table 1 illustrate embodiments in which the rate of dissolution of the test piece 1 dipped into the F ion-containing acid aqueous solution was in the range of 0.002 g/(m²·s) to less than 0.50 g/(m²·s), and the passive film contained fluorine. Comparative Examples illustrate embodiments in which the passive film did not contain fluorine.
From Table 1, SUS304L Nos. 4 to 8 according to Inventive Examples exhibited a contact electric resistance of not more than 20 mΩ·cm². The stainless steels Nos. 6 and 7 which showed rates of dissolution of 0.093 g/(m²·s) and 0.045 g/(m²·s), respectively, exhibited a contact electric resistance of not more than 10 mΩ·cm². With regard to 21 Cr steel, the steels Nos. 11 to 16 according to Inventive Examples exhibited a contact electric resistance of not more than 20 mΩ·cm². The stainless steels Nos. 12 to 16 which showed rates of dissolution ranging from 0.021 g/(m²·s) to 0.098 g/(m²·s) exhibited a contact electric resistance of not more than 10 mΩ·cm². SUS201 Nos. 21 to 24 according to Inventive Examples exhibited a contact electric resistance of not more than 20 mΩ·cm². The stainless steels Nos. 23 and 24 which showed rates of dissolution of 0.059 g/(m²·s) and 0.017 g/(m²·s), respectively, exhibited a contact electric resistance of not more than 10 mΩ·cm². With regard to each of these types of steel, Inventive Examples achieved a marked decrease in contact electric resistance while Comparative Examples resulted in a contact electric resistance of more than 20 mΩ·cm².

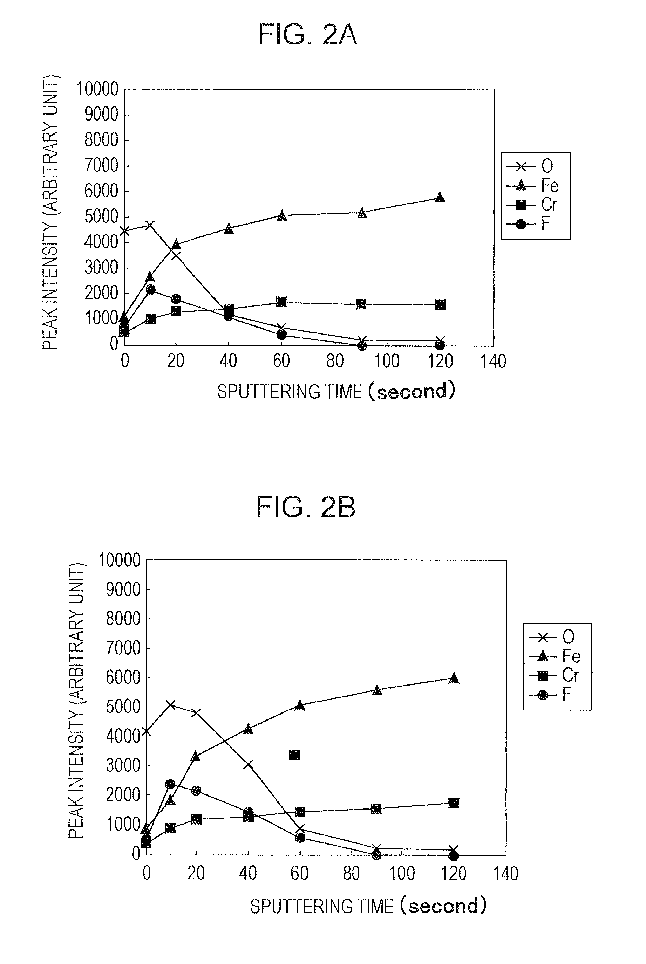

Next, the 21 Cr steel test piece that had been dipped into a 5 %HF by mass + 1 %HNO₃ by mass acid aqueous solution (No. 14 in Table 1) was held in a sulfuric acid aqueous solution with pH 3 (temperature: 80°C) at a constant electric potential (0.8 V vs. SHE) for 1000 hours so as to simulate conditions encountered in the use as a separator in a proton-exchange membrane fuel cell. The test piece was recovered and was analyzed by X-ray photoelectron spectroscopy in order to examine the presence or absence of fluorine in the passive film. The examination method is already described above. The results obtained by X-ray photoelectron spectroscopy are illustrated in FIGS. 2A and 2B. In FIGS. 2A and 2B, the horizontal axis indicates the time for which sputtering was carried out (hereinafter, referred to as sputtering time), and the vertical axis indicates the peak intensity in the spectrum. FIG. 2A illustrates the results of analysis before the test piece was held for 1000 hours, and FIG. 2B illustrates the results of analysis after the test piece was held for 1000 hours. From FIGS. 2A and 2B, the test piece in each case showed a distinct peak assigned to fluorine when the sputtering time was within 60 seconds. After the sputtering time had exceeded 60 seconds, the passive film had been completely removed and the obtained peak intensity indicated data of fluorine contained in the base stainless steel sheet; as illustrated, the F peak intensity was nearly 0. Thus, it was confirmed that the passive film contained fluorine even after the stainless steel was subjected to the treatment simulating conditions that would be encountered in the use as a separator in a proton-exchange membrane fuel cell.

Further, the test piece was recovered and the contact electric resistance was measured. The measurement method is already described above. As a result, the contact electric resistance was 5.2 mΩ·cm². Thus, it was confirmed that the contact electric resistance was maintained at a low level and the stainless steel exhibited excellent electrical conductivity even after the stainless steel was subjected to the treatment simulating conditions that would be encountered in the use as a separator in a proton-exchange membrane fuel cell.

Although the above embodiments involved a compound liquid containing hydrofluoric acid and nitric acid as the acid aqueous solution into which stainless steel was dipped, hydrofluoric acid may be replaced by, for example, sodium fluoride, calcium fluoride or lithium fluoride. The conditions such as the concentration and temperature of the acid aqueous solution may be appropriately controlled in accordance with the kinds of components of stainless steel to be dipped into the solution, such that a predetermined rate of dissolution will be obtained.

### [Reference Signs List]

1 TEST PIECE
2 CARBON PAPER
3 ELECTRIC POLE

**[Table 1]**

| No. | Steel | Dipping conditions | | | | Rate of dissolution (g/(m²·s)) | Fluorine | Contact resistance (mΩ·cm²) | Remarks |
|---|---|---|---|---|---|---|---|---|---|
| | | HNO₃ concentration (% by mass) | HF concentration (% by mass) | Temperature (°C) | Dipping time (sec) | | | | |
| 1 | SUS304L | - | - | - | - | - | Absent | 75.3 | Comparative Example |
| 2 | | 15 | 0 | 55 | 60 | <0.001 | Absent | 70.1 | Comparative Example |
| 3 | | 5 | 15 | | | 0.571 | Absent | 48.3 | Comparative Example |
| 4 | | 1 | 7 | | | 0.138 | Present | 12.1 | Inventive Example |
| 5 | | 2 | 5 | | | 0.197 | Present | 16.7 | Inventive Example |
| 6 | | 1 | 5 | | | 0.093 | Present | 8.1 | Inventive Example |
| 7 | | 1 | 3 | | | 0.045 | Present | 8.2 | Inventive Example |
| 8 | | 0 | 3 | | | 0.003 | Present | 10.9 | Inventive Example |
| 9 | 21 Cr steel | - | - | - | - | - | Absent | 67.2 | Comparative Example |
| 10 | | 15 | 0 | 55 | 60 | <0.001 | Absent | 55.8 | Comparative Example |
| 11 | | 5 | 15 | | | 0.226 | Present | 11.9 | Inventive Example |
| 12 | | 1 | 7 | | | 0.098 | Present | 6.4 | Inventive Example |
| 13 | | 2 | 5 | | | 0.052 | Present | 5.0 | Inventive Example |
| 14 | | 1 | 5 | | | 0.036 | Present | 4.7 | Inventive Example |
| 15 | | 1 | 3 | | | 0.028 | Present | 5.1 | Inventive Example |
| 16 | | 0 | 3 | | | 0.021 | Present | 6.5 | Inventive Example |
| 17 | SUS201 | - | - | - | - | - | Absent | 85.7 | Comparative Example |
| 18 | | 15 | 0 | 55 | 60 | <0.001 | Absent | 79.2 | Comparative Example |
| 19 | | 5 | 15 | | | 0.812 | Absent | 68.1 | Comparative Example |
| 20 | | 1 | 7 | | | 0.527 | Absent | 50.4 | Comparative Example |
| 21 | | 2 | 5 | | | 0.273 | Present | 18.2 | Inventive Example |
| 22 | | 1 | 5 | | | 0.104 | Present | 13.8 | Inventive Example |
| 23 | | 1 | 3 | | | 0.059 | Present | 9.4 | Inventive Example |
| 24 | | 0 | 3 | | | 0.017 | Present | 8.9 | Inventive Example |

## Claims

1. Stainless steel for conductive members which exhibits low contact electric resistance, wherein the stainless steel has a passive film on the surface and the passive film contains fluorine.

2. A method for producing stainless steel for conductive members with low contact electric resistance, comprising dipping stainless steel into a solution containing fluoride ions at a rate of dissolution of not less than 0.002 g/(m²·s) to less than 0.50 g/(m²·s).

3. The method for producing stainless steel according to Claim 2, wherein the rate of dissolution is not less than 0.005 g/(m²·s) to less than 0.30 g/(m²·s).

4. The method for producing stainless steel according to Claim 2, wherein the rate of dissolution is not less than 0.01 g/(m²·s) to less than 0.10 g/(m²·s).
